## Europäisches Patentamt

## European Patent Office

## Office européen des brevets

(11) Veröffentlichungsnummer: **0 103 802**
**B1**

(12) **EUROPÄISCHE PATENTSCHRIFT**

(45) Veröffentlichungstag der Patentschrift:
14.12.88

(21) Anmeldenummer: 83108738.2

(22) Anmeldetag: 05.09.83

(51) Int. Cl.⁴: **G 01 L 5/00**, G 01 L 1/00,
G 01 N 29/00, G 01 M 19/00

(54) Einrichtung zum Bestimmen der Kontaktspannungen in vorgespannten Werkzeugen.

(30) Priorität: 16.09.82 BG 57976/82

(43) Veröffentlichungstag der Anmeldung:
28.03.84 Patentblatt 84/13

(45) Bekanntmachung des Hinweises auf die Patenterteilung:
14.12.88 Patentblatt 88/50

(84) Benannte Vertragsstaaten:
AT BE CH DE FR GB IT LI NL SE

(56) Entgegenhaltungen:
BG-A-28 809
DE-A-3 043 794
US-A-3 580 057

(73) Patentinhaber: INSTITUT PO METALOSNANIE I
TECHNOLOGIA NA METALITE, Tschapaev-
Strasse No. 53, Sofia (BG)

(72) Erfinder: Marinov, Michail Zanov, Dipl.- Ing.,
Komplex Buckstone Bl.21, App. 63, Sofia (BG)
Erfinder: Petkantschin, Ljubomir Todorov, Dipl.-
Ing., Batscho Kiro- Strasse 46, Sofia (BG)
Erfinder: Puschev, Georgi Ivanov, Dipl.- Ing.,
Stara Planina- Strasse 9, Sofia (BG)
Erfinder: Kostov, Georgi Todorov, Dipl.- Ing.,
Komplex Mladost 1 Block 76, Stock V, Sofia (BG)
Erfinder: Mitchovski, Mitko Minkov, Dipl.- Ing.,
Komplex Mladost- 2 Bl. 204, App. 104, Sofia (BG)
Erfinder: Manolova, Valentina Alexandrovna,
Komplex Mladost- 3 Block 308, App. 22, Sofia (BG)

(74) Vertreter: Finck, Dieter, Patentanwälte v. Füner,
Ebbinghaus, Finck Mariahilfplatz 2 & 3, D-8000
München 90 (DE)

EP 0 103 802 B1

## Beschreibung

Die Erfindung betrifft eine Einrichtung zum Bestimmen der Kontaktspannungen in vorgespannten Werkzeugen mit einer Basis und mit zwei drehbaren, gegenüberliegend angeordneten, austauschbaren Spitzen, von denen die eine an einer drehbaren Achse und die andere an einer Schraube über ein Lager gehalten ist und von denen jede einer Platte zugeordnet ist, die parallel zueinander angeordnet und miteinander verbunden sind und zwischen denen eine Wanne mit einem akustischem Medium vorgesehen ist, an deren Boden eine axial bewegliche Führung befestigt ist, die eine Öffnung mit einem Fühler aufweist, der mit einer Meßeinrichtung verbunden ist.

Mit der Einrichtung lassen sich Kontaktspannungen in vorgespannten Werkzeugen für die plastische Umformung, z. B. in vorgespannten Fließpreßmatrizen sowie in Schrumpfverbindungen bestimmen.

Es ist eine Einrichtung für das Bestimmen von Kontaktspannungen bekannt (BG-PS-28 809), die aus zwei beweglichen gegenüberliegenden Spitzen besteht, zwischen denen das zu kontrollierende Element eingesetzt wird. Die eine Spitze ist an einer drehbaren Achse befestigt. Die andere Spitze sitzt an einer Schraube über einem Lager. Beide Spitzen sind in zwei parallel zueinander angeordneten Platten montiert. Die Achse und die Schraube sind durch einen Bügel miteinander verbunden. Auf der Basis ist zwischen den Platten eine Wanne mit einem akustischen Medium angeordnet. Durch die Basis und den Wannenboden erstreckt sich eine axial bewegliche Führung mit einer Öffnung, in die ein Ultraschall-Fühler eingesetzt ist, der mit einer Meßeinrichtung verbunden ist.

Nachteilig bei dieser Einrichtung ist die dauernde manuell vorzunehmende Nachregulierung des Abstands zwischen dem kontrollierten Element und dem Fühler bei jeder einzelnen Messung.

Der Erfindung liegt die Aufgabe zugrunde, die Einrichtung der eingangs genannten Art so auszubilden, daß durch automatische Arbeitsweise die Fehler der subjektiven Einstellung bei den einzelnen Messungen vermieden werden.

Diese Aufgabe wird bei der Einrichtung der eingangs genannten Art erfindungsgemäß dadurch gelöst, daß zur Verbindung der beiden parallelen Platten zwei parallele Führungen vorgesehen sind, an denen die Basis aufgehängt ist, an der über eine Führungsschraube mit Mutter eine Hülse befestigt ist, daß die Basis mit einer Antriebschraube mit Handgriff versehen ist, daß in der Hülse eine Feder festgelegt ist, die fest mit einer Führungsbuchse verbunden ist, welche zum Teil von der Hülse umgeben ist, daß zwischen der Hülse und der Führungsbuchse ein radiales Spiel vorgesehen ist, daß die Wanne an der Führungsbuchse befestigt ist, in der parallele drehbare Rollen gelagert sind, und daß der Fühler in der Öffnung der axial beweglichen Führung über eine in sie eingebaute Begrenzungsbuchse fixiert ist, die mit der Führung durch eine Gegenmutter verbunden ist, die an eine mit der Führungsbuchse verbundene zweite Mutter angepreßt ist.

Die erfindungsgemäße Einrichtung hat den Vorteil, daß die Bestimmung der Kontaktspannungen und somit die zerstörungsfreie Kontrolle von vorgespannten Werkzeugen automatisch durchgeführt werden kann, wobei Abweichungen im Übermaß des Sitzes in den vorgespannten Werkzeugen schnell festgestellt werden können.

Anhand von Zeichnungen wird ein Ausführungsbeispiel der Erfindung näher erläutert. Es zeigen:

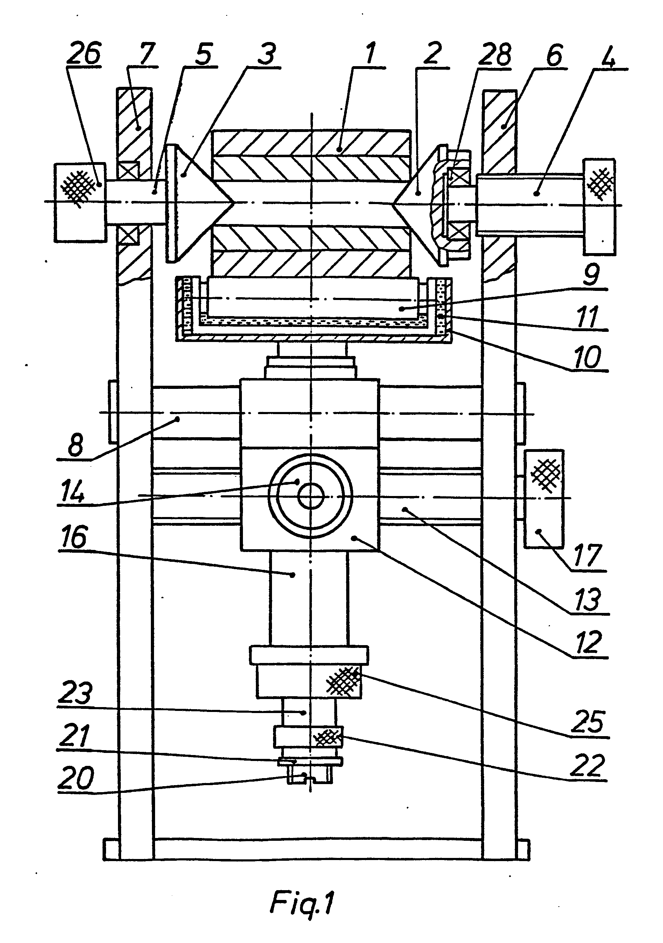

Fig. 1　eine Gesamtansicht der Einrichtung und

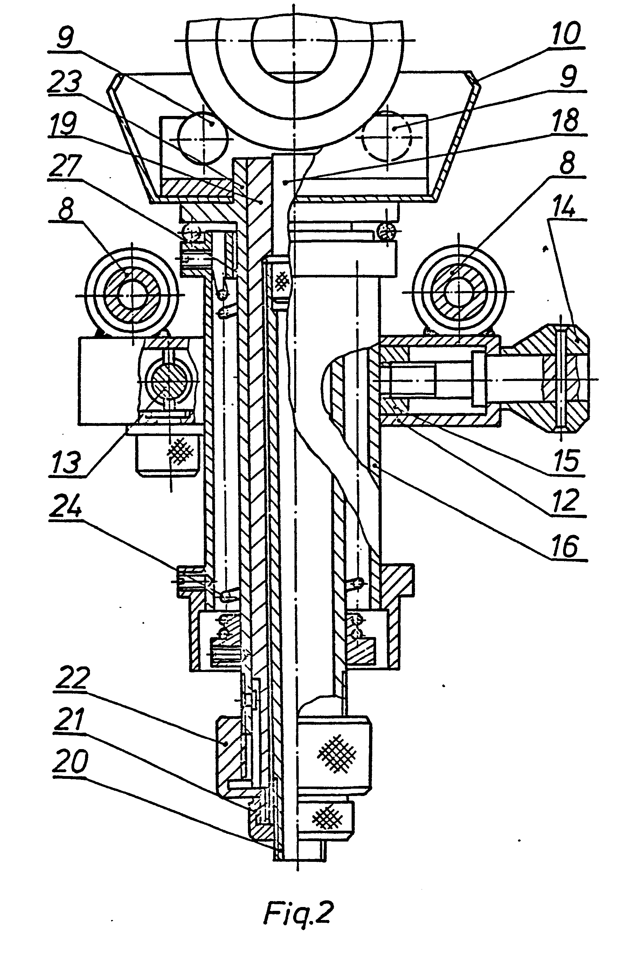

Fig. 2　teilweise geschnitten das schwebende System der Einrichtung.

Das kontrollierte vorgespannte Umformwerkzeug 1 ist zwischen zwei beweglichen gegenüberliegenden austauschbaren drehbaren Spitzen 2 und 3 fixiert. Die Spitze 2 sitzt mit einem Lager 28 auf einer Schraube 4. Die Spitze 3 sitzt an einer drehbaren Achse 5 mit einem Handgriff 26. Die Schraube 4 sitzt in einer Platte 6. Die Achse 5 ist in einer zur Platte 6 parallelen Platte 7 montiert. Die Platten 6 und 7 sind durch parallele Führungen 8 verbunden. Das Werkzeug 1 steht mit parallelen sich drehenden Rollen 9 in Berührung, die in einer Wanne 10 gelagert sind, die mit einem akustischen Medium 11 gefüllt ist. Auf einer Basis 12, die an parallelen Führungen 8 aufgehängt ist und mit einer Antriebschraube 13 versehen ist, ist über eine Führungsschraube 14 und eine Mutter 15 eine Hülse 16 befestigt, an welcher eine Buchse 25 starr befestigt ist. Die Antriebschraube 13 ermöglicht über einen Handgriff 17 eine fortschreitende Bewegung der Basis 12, der Hülse 16 und der Baugruppe, die aus den parallelen Rollen 9, aus einem Fühler 18, der in einer Öffnung einer mit Hilfe einer Begrenzungsbuchse 20 und einer Gegenmutter 21 axial beweglichen Führung 19 fixiert ist, aus einer zweiten Mutter 22 und aus der Wanne 10 mit dem akustischen Medium 11 besteht, die mit der Führungsbuchse 23 fest verbunden ist, die ein radiales Spiel 27 in bezug auf die Hülse 16 aufweist. Die Elemente der Baugruppe sind an der Hülse 16 über eine Feder 24 aufgehängt, welche mit ihrem unteren Ende an der Führungsbuchse 23 befestigt ist.

Die Einrichtung arbeitet folgendermaßen: Das kontrollierte vorgespannte Werkzeug 1 wird zwischen den Spitzen 2 und 3 eingelegt und mit der Schraübe 4 festgespannt.

Die grobe Einstellüng des Fühlers 18 in bezüg auf das Werkzeug 1 erfolgt duch Bewegung der Hülse 16 in senkrechter Richtung mit Hilfe der Buchse 25, bis eine gewünschte Andruckkraft zwischen den Rollen 9 und dem Werkzeug 1 gegeben ist und eine Fixierung mit Hilfe der Führungsschraube 14 und der Mutter 15 vorgenommen ist. Die feine Einstellung des Fühlers 18 in bezug auf die Kontur des Werkzeugs 1 erfolgt durch Drehung der zweiten Mutter 22. Das radiale Spiel 27 erlaubt eine Selbsteinstellung der Rollen 9 an der Kontur des Werkzeugs 1.

Die gewünschte Position des Fühlers 18 auf der Oberfläche des Werkzeugs 1 wird durch Verschieben der Basis 12 zusammen mit der Hülse 16 und der daran befestigten Baugruppe erzielt, und zwar mit Hilfe des Handgriffs 17 und durch Drehen des Werkzeugs 1 mit Hilfe des zweiten Handgriffs 26. Für jede Position gibt der Fühler 18 Signale über eine nicht gezeigte Erregerquelle ab und registriert die von der Grenzfläche zwischen Matrize und Bandage reflektierten Signale mit Hilfe eines nicht gezeigten Registriergeräts. Die Erregung und Registrierung können mit einem Ultraschall-Prüfgerät erreicht werden.

## Patentanspruch

Einrichtung zum Bestimmen der Kontaktspannungen in vorgespannten Werkzeugen mit einer Basis und mit zwei drehbaren gegenüberliegend angeordneten austauschbaren Spitzen, von denen die eine an einer drehbaren Achse und die andere an einer Schraube über ein Lager gehalten ist, und von denen jede einer Platte zugeordnet ist, die parallel zueinander angeordnet und miteinander verbunden sind und zwischen denen eine Wanne mit einem akustischen Medium vorgesehen ist, an deren Boden eine axial bewegliche Führung befestigt ist, die eine Öffnung mit einem Fühler aufweist, der mit einer Meßeinrichtung verbunden ist, dadurch gekennzeichnet, daß zur Verbindung der beiden parallelen Platten (6, 7) zwei parallele Führungen (8) vorgesehen sind, an denen die Basis (12) aufgehängt ist, an der über eine Führungsschraube (14) mit Mutter (15) eine Hülse (16) befestigt ist, daß die Basis (12) mit einer Antriebschraube (13) mit Handgriff (17) versehen ist, daß in der Hülse (16) eine Feder (24) festgelegt ist, die fest mit einer Führungsbuchse (23) verbunden ist, welche zum Teil von der Hülse (16) umgeben ist, daß zwischen der Hülse (16) und der Führungsbuchse (23) ein radiales Spiel (27) vorgesehen ist, daß die Wanne (10) an der Führungsbuchse (23) befestigt ist, in der parallele drehbare Rollen (9) gelagert sind, und daß der Fühler (18) in der Öffnung der axial beweglichen Führung (19) über eine in sie eingebaute Begrenzungsbuchse (20) fixiert ist, die mit der Führung (19) durch eine Gegenmutter (21) verbunden ist, die an eine mit der Führungsbuchse (23) verbundene zweite Mutter (22) angepreßt ist.

## Claim

Device for determining contact stresses in prestressed tools with a base and two rotatable exchangeable centres arranged opposite each other, one of which is retained on a rotatable shaft and the other on a screw by means of a bearing, and each of which is assigned to a plate, these plates being arranged parallel to each other and being connected to each other, and between which a bath with an acoustic medium is provided, on the bottom of which bath there is secured an axially movable guideway which has an aperture with a sensor which is connected to a measuring device, characterised in that to connect the two parallel plates (6, 7) two parallel guide-ways (8) are provided, on which the base (12) is suspended, on which a sleeve (16) is secured by means of a guide screw (14) with a nut (15), in that the base (12) is provided with a drive screw (13) with a handle (17), in that a spring (24) is secured in the sleeve (16) and is fixedly connected to a guide bushing (23) which is partly enclosed by the sleeve (16), in that between the sleeve (16) and the guide bushing (23) there is provided a radial clearance (27), in that the bath (10) is secured on the guide bushing (23) in which parallel rotatable rollers (9) are mounted, and in that the sensor (18) is fixed in the aperture of the axially movable guide-way (19) by means of a limiting bushing (20) built into the guide-way, which is connected to the guide-way (19) by means of a counter nut (21) which is pressed onto a second nut (22) connected to the guide bushing (23).

## Revendication

Appareil pour déterminer les tensions de contact dans des outils précontraints, comportant une base ainsi que des pointes tournantes, disposées en face l'une de l'autre et échangeables, dont l'une est retenue sur un axe tournant et l'autre sur une vis par l'intermédiaire d'un roulement, et dont chacune est associée à une plaque, les deux plaques étant disposées parallèlement entre elles et reliées l'une à l'autre, tandis qu'entre les deux plaques est placée une cuve qui contient un fluide acoustique et au fond de laquelle est fixé un guide mobile axialement, qui présente une ouverture contenant un palpeur lui-même relié à un appareil de mesure, caractérisé en ce que pour la liaison des deux plaques parallèles (6, 7), sont prévus deux guides parallèles (8) auxquels est suspendue la base (12) à laquelle est fixé un manchon (16) par l'intermédiaire d'une vis de guidage (14) avec ecrou (15); en ce que la base (12) est munie d'une vis d'entraînement (13) avec une poignée (17); en ce que dans le manchon (16) est retenu un ressort (24) qui est solidarisé à une douille de guidage (23) partiellement entourée par le manchon (16); en ce qu'entre le manchon (16) et la douille de guidage (23) est ménagé un jeu radial (27); en ce qu'à la douille de guidage (23) est fixée la cuve (10) dans laquelle portent des rouleaux tournants parallèles (9); et en ce que le palpeur (18) est fixé dans l'ouverture du guide mobile axialement (19), par l'intermédiaire d'une douille de limitation (20) qui est installée dans ce guide et qui est reliée au guide (19) par un contre-écrou (21) repoussé contre un second écrou (22) relié à la douille de guidage (23).

Fig.1

Fig.2